# EUROPEAN PATENT APPLICATION

(11) **EP 4 016 409 A1**
(43) Date of publication of application: **22.06.2022**
(21) Application number: 21194353.5
(22) Date of filing: 01.09.2021
(51) Int. Cl.: G06Q 10/00, G06Q 50/00

(54) **PERSONAL COMMUNICATION DRONES**

(30) Priority: 18.12.2020 US 202017126307
(71) Applicant: Donovan, Laura Leigh, Scottsdale, AZ 85250 (US); Donovan, Bradford Andrew, Scottsdale, AZ 85250 (US)
(72) Inventor: Donovan, Laura Leigh, Scottsdale, 85250 (US); Donovan, Bradford Andrew, Scottsdale, 85250 (US)
(74) Representative: LKGlobal UK Ltd.

(57) **Abstract**

In recent years, social media has become a mainstay of global communication culture. These platforms have become a proxy for personal communication and conduit for interaction in the real world. So much so, that many have turned to these platforms for dating, friendship and finding similarly minded communities. Unfortunately, there is limited technology for translating this online communication and interaction to the user's physical proximity or real-world circumstance. The various embodiments of the invention herein disclose personal communication drone systems and methodologies for utilizing drones to leverage a user's online persona or profile to communicate personal messages, images or data to a third party. In one embodiment, a user (like a social media influencer) can activate a drone, which is detachably coupled to a portable drone home area and programmed to track the user, to find a new targeted third party and to communicate personal messages, images or data.

## Description

### CROSS-REFERENCE TO RELATED APPLICATION(S)

This application claims priority to U.S. provisional applications No. 63/088,702 filed on October 7, 2020 and No. 63/079,610 filed on September 17, 2020. The disclosure of the above application is incorporated herein by reference.

### STATEMENT OF FEDERALLY SPONSORED RESEARCH OR DEVELOPMENT

Not applicable.

### FIELD OF THE INVENTION

The present invention is directed to an interactive drone solution for a user to communicate personal messages, images or data.

### BACKGROUND OF THE INVENTION

The present invention is directed to an interactive drone solution for a user to communicate personal messages, images or data.

In recent years, social media has become a mainstay of global communication culture. Current social media platforms include, inter alia, Twitter ^{®}, Instagram ^{®}, Only Fans ^{®}, Facebook ^{®} and Facebook Live ^{®} and TikTok ^{®}.

Importantly, these platforms have become a proxy for personal communication and conduit for interaction in the real world. So much so, that many have turned to these platforms for dating, friendship and finding similarly minded communities. Examples of social media sites may include, but are not limited to Bumble ^{®}, Tinder ^{®} Hinge ^{®} and Gindr ^{®}.

Unfortunately, there is limited technology for translating this online communication and interaction to the user's physical proximity or real-world circumstance.

Ergo, a solution is needed to leverage the online persona of a user to communicate personal messages, images or data to a third party in their physical proximity. Small, lightweight drones offer a solution.

Currently, as illustrated, inter alia, in U.S. Patent Application 20190227572 and U.S. Patent 10,625,854, drone technology is developing rapidly and multiple references can be cited to for drone imaging, control, flight planning and tracking subjects with global positioning (GPS).

Of interest to the present invention are U.S. Patent Nos. 9,859,938 and 10,046,732 titled "Public safety smart belt" to Piccioni disclosing a smart belt used for safety and law enforcement ("Piccioni") and U.S. Patent Application 20170180623 titled "Selfie-Drone System and Performing Method Thereof' to Lin disclosing use of a done in a preprogrammed manner to take a selfie ("Lin").

Piccioni was issued two patents related to a safety belt that included means for storing, transporting and recharging various law enforcement equipment. With reference to Figure 7, Piccioni disclosed a drone as part of this law enforcement equipment.

The present invention is distinguished from Piccioni in purpose, structure and function. Primarily, the Piccioni disclosure is directed to a completely different purpose, namely, law enforcement and, thus, is nonanalogous art. One would not look to a law enforcement solution for technology related to social media influencing or communication. Additionally, and importantly, the present invention is distinguished from Piccioni in multiple ways including, but not limited to, the structure and function of communicating personal messages, images (whether it be live streaming, video, vlogging, teleconferencing, or still pictures) or data to a third party in their proximity.

In 2017, Lin attempted to claim the use of existing drone technology with preprogrammed, input of parameters (template instruction from a database) to position a drone for a photo of a user.

Lin was abandoned after multiple rounds of examination as obvious under 35 U. S. C. 103 in view of U.S. Patent Applications 20170180623; 20160271796 and 20120307042.

The present invention is distinguished from Lin in multiple ways including, but not limited to, creating a personal communication drone system that independently tracks a user and may communicate personal messages, images (whether it be live streaming, video, vlogging, teleconferencing, or still pictures) or data to a third party in their proximity based on user commands.

### SUMMARY OF THE INVENTION

It is an object of the present invention to provide a solution for a user to communicate personal messages, images (whether it be live streaming, video, vlogging, teleconferencing, or still pictures) or data to a third party in their proximity.

The various embodiments of the present invention disclose personal communication drone systems and methodologies for utilizing drones to leverage a user's online persona or profile to communicate personal messages, images or data to a third party. In one embodiment, a user (like a social media influencer) can activate a drone, which is detachably coupled to a portable drone home area and programmed to track the user, to find a new targeted third party and to communicate personal messages, images or data.

The personal communication drone systems and methodologies of the present invention comprises (1) at least one drone in wireless communication to a personal computer configured to provide commands to the drone and to track a user; (2) at least one portable drone home area coupled to the user; (3) an application with the user's profile and (4) drone communication element configured to pass along personal messages, images or data to a third party.

### BRIEF DESCRIPTION OF THE DRAWINGS

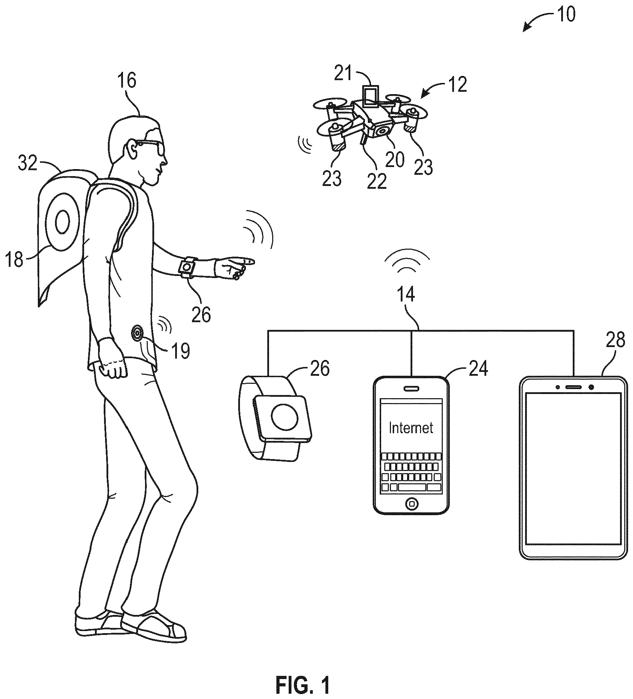

Figure 1 is a diagram of the basic components of the personal communication drone system according to one embodiment of the present disclosure.

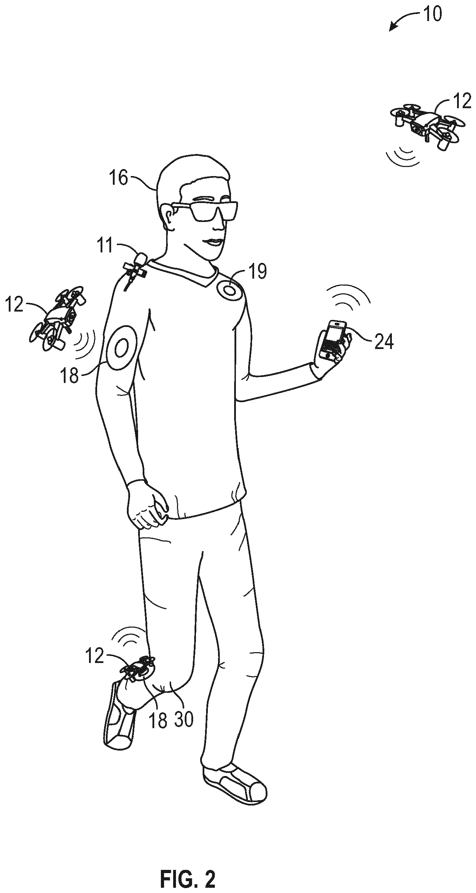

Figure 2 is an exemplary view of swarming drones tracking user and docking with wearable home area according to one embodiment of the present disclosure.

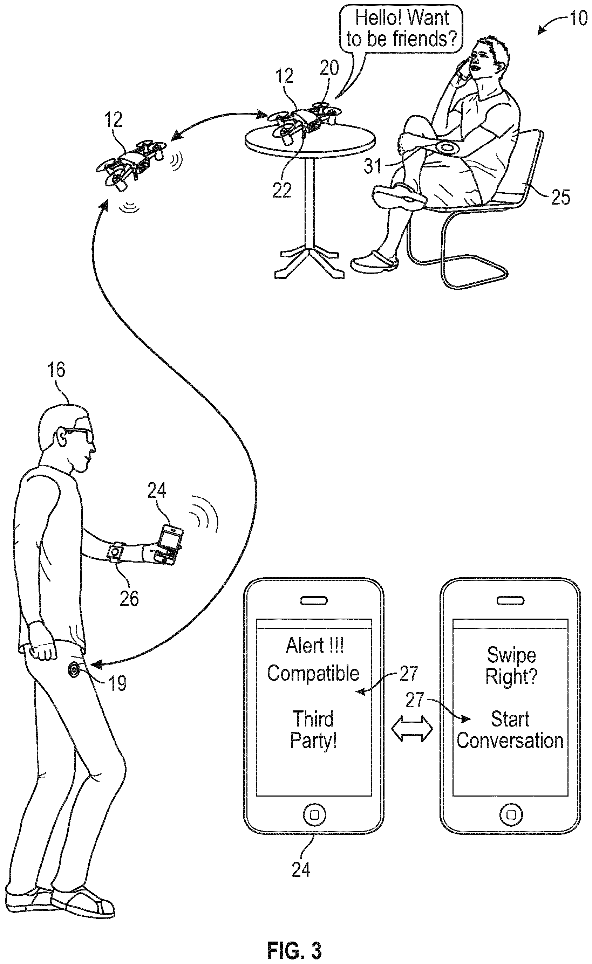

Figure 3 is an exemplary view of a drone targeting and communicating with a third party according to one embodiment of the present disclosure.

### DETAILED DESCRIPTION

The present invention allows a user to communicate personal messages, images (whether it be live streaming, video, vlogging, teleconferencing, or still pictures) or data to a third party in their proximity

This personal communication drone system 10 of the present invention comprises at least one drone 12 in wireless communication to a personal computer 14 configured to provide commands to the drone 12 and to track a user 16; at least one portable drone home area 18 coupled to the user 16; an application 27 that includes user-profile information (i.e., the user's profile) and a drone communication element 20, 21, 22, 23 configured to pass along personal messages, images or data to a third party 25.

In accordance with various embodiments of the present invention, a drone 12 may comprise any commercially available drone or any drone configuration modified based on commercially available drone technologies including, but not limited to, any audiovisual, wireless communication, global positioning (GPS), power supply, memory, processing or programable components. In accordance with various embodiments of the present invention, it is preferential that the drone 12 be small and lightweight to allow the user 16 to carry comfortably on their person.

Further, in accordance with various embodiments of the present invention, it is preferential that the drone 12 optimized to communicate stable personal messages, images (whether it be live streaming, video, vlogging, teleconferencing, or still pictures) or data within one-hundred yards in light wind and weigh less than 10-pounds. For reference, a light wind or "fresh breeze" as defined by the Beaufort wind scale may be less than about 24 mph, wherein small trees sway.

As disclosed, in accordance with various embodiments of the present invention, the drone 12 may comprise multiple cameras 20, screens 21, microphones 22 and/or speakers 23.

Further, in accordance with various embodiments of the present invention, the drone 12 comprises a location technology, like global positioning (GPS), capable of tracking the user 16 the drone home area 18 to orient location and/or an identified third party 25 for conversation.

In accordance with various embodiments of the present invention, a personal computer 14 may comprise any commercially available or any configuration modified based on commercially available personal computer technologies including, but not limited to, any audiovisual, screen, wireless communication, global positioning (GPS), power supply, memory, processing or programable components.

In accordance with various embodiments of the present invention, it is preferential that the personal computer 14 be small and lightweight to allow the user 16 to carry comfortably on their person including, but not limited to, any smartphone 24, smartwatch 26 or tablet 28. Additionally, for the purposes of the present invention, all peripheral components are considered as disclosed within the personal computer 14, like a microphone or camera worn by the user 16.

In accordance with various embodiments of the present invention, a drone home area 18 may further comprise a recharging device any commercially available or any configuration modified based on commercially available wireless charging / wireless power transfer technologies including, but not limited to, any type of electromagnetic induction, inductive coupling or resonant inductive coupling technologies.

In accordance with various embodiments of the present invention, it is preferential that the drone home area 18 be small and lightweight to allow the user 16 to carry comfortably on their person. Further, in accordance with various embodiments of the present invention, it is preferential that the drone home area 18 be coupled directly or indirectly to the user 16.

In accordance with various embodiments of the present invention, it is preferential that the home area 18 comprises a wearable including, but not limited to, an article of clothing 30, smartphone 24, smartwatch 26 or tablet 28.

In accordance with various embodiments of the present invention, it is preferential that the drone home area 18 comprises a pack 32 including, but not limited to, a backpack, fanny pack or a hydration backpack (i.e. CamelBak ^{®}).

In accordance with various embodiments of the present invention, one or more drones 12 is detachably coupled to the drone home area 18 such that it is portable and deployed without needing to be carried by the user 16.

It is in accordance with various embodiments of the present invention, the drone home area 18 further comprises a tag, pin, sticker, or other signaling device 19 that provides a signal for orientation of one or more drones 12 relative to the body orientation of the user 16. This signaling device 19 may also be embedded within or incorporated into any wearable drone home area 18. Further, in accordance with various embodiments of the present invention, signaling device 19 may be affixed to (i.e. a sticker) to the user 16, clipped to the user 16, or embedded in the clothing of the user 16.

In accordance with various embodiments of the present invention, personal communication drone system 10 comprises an application interface 27 configured to run on the personal computer 14 to allow the user 16 to: (i) configure a drone 12 to personal voice commands and (ii) pair with an application interface 27 comprising the user's profile.

In accordance with various embodiments of the present invention, this application 27 may comprise any commercially available social media and/or dating application (include, inter alia, Twitter ^{®}, Instagram ^{®}, Only Fans ^{®}, Facebook ^{®} and Facebook Live ^{®}, Bumble ^{®}, Tinder ^{®} Hinge ^{®} and Gindr ^{®} and TikTok ^{®}).

Further, as noted above, in accordance with various embodiments of the present invention, the personal communication drone system 10 comprises a communication element including, but not limited to, a camera 20, a screen 21, a microphone 22 and/or a speaker 23 configured to pass along personal messages, images or data to a third party.

In accordance with various embodiments of the present invention, the personal communication drone system 10 allows the user 16 to manage and curate communications broadcasted from the drone 12 to a third party and to provide iterative instructions to drone 12 based on a third party response. Further, in accordance with various embodiments of the present invention, these multiple instructions to drone 12 may be by voice command to either the microphone 22 on the drone 12, the microphone on the personal computer 14, the microphone coupled to the user 16 (i.e. a lavalier microphone 11) or any combination thereof.

Further, in accordance with various embodiments of the present invention, the personal communication drone system 10 allows the user 16 to transform an online communication, persona, social media presence, chat, etc. into a real-world interaction and communication vis-à-vis one or more small, lightweight drone.

An illustrative example in accordance with various embodiments of the present invention, user 16 has created a profile on Tinder ^{®} or Match ^{®}, application 27, looking for love, friendship and/or human connection. As the application 27 alerts the user that a compatible third party 25 is in the proximity, the user 16 may initiate a conversation through chat, text, etc. with the third party 25. If the third party 25 agrees to drone 12 communication, the user 16 may provide an instruction to the personal communication drone system 10 paired to the application 27 to find the targeted third party 25 and to communicate personal messages, images or data.

The drone 12 may locate the targeted third party 25 using information from an application profile of the targeted third party 25; a second drone home area 31 on the targeted third party 25 (assuming that the third party also has a personal communication drone system); and/or GPS within the personal computing device of the targeted third party 25 (assuming permissions are given to access location data).

At this point, assuming agreement between user 16 and the targeted third party 25, in accordance with various embodiments of the present invention, the drone 12 will leave a portable drone home area 18 coupled to the user 16; find the targeted third party 25 and pass along personal messages, images or data to the targeted third party 25.

In accordance with various embodiments of the present invention, these messages, images or data can be provided through one or more drone communication elements 20, 21, 22, 23. For example, with one or more images (whether it be live streaming, video, vlogging, teleconferencing, or still pictures) utilizing a cameras 20 and screen 21 on the drone 12; by written message on a screen 21 on the drone 12 and/or through voice vis-à-vis a microphone 22 and speaker 23 on the drone 12. It is contemplated within the scope of this disclosure that the user 16 and the targeted third party 25 could communicate in real-time or based on cached data sent with the drone 12.

Further disclosed, in accordance with various embodiments of the present invention, and the personal communication drone system 10 described herein, is a corresponding method comprising (1) wirelessly pairing at least one drone 12 to a personal computer 14 and an application 27 with the user's 16 profile; (2) tracking a user 16 with at least one drone 12; (3) alerting the user 16 of a compatible targeted third party 25; (4) sending at least one drone 12 to the targeted third party 25 location; (5) communicating with the targeted third party 25 through one or more drone communication elements 21, 22, 23 configured to pass along personal messages, images or data.

The present invention is directed to a new and unobvious personal communication drone system and should not be limited by the above described embodiment but should be limited solely by the claims that follow.

As used herein, unless otherwise limited or modified, lists with elements that are separated by conjunctive terms (e.g., "and") and that are also preceded by the phrase "one or more of" or "at least one of" indicate configurations or arrangements that potentially include individual elements of the list, or any combination thereof. For example, "at least one of A, B, and C" or "one or more of A, B, and C" indicates the possibilities of only A, only B, only C, or any combination of two or more of A, B, and C (e.g., A and B; B and C; A and C; or A, B, and C).

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The description of the present disclosure has been presented for purposes of illustration and description but is not intended to be exhaustive or limited to the disclosure in the form disclosed. Many modifications and variations will be apparent to those of ordinary skill in the art without departing from the scope and spirit of the disclosure. Explicitly referenced embodiments herein were chosen and described in order to best explain the principles of the disclosure and their practical application, and to enable others of ordinary skill in the art to understand the disclosure and recognize many alternatives, modifications, and variations on the described example(s). Accordingly, various embodiments and implementations other than those explicitly described are within the scope of the following claims.

## Claims

1. A personal drone communication system comprising:
at least one drone operable to track a user;
a personal computer in wireless communication with the at least one drone and configured to provide commands to the drone while the drone is tracking the user, the personal computer having an application stored thereon that includes user-profile information about the user;
at least one portable drone home area coupled to the user, wherein at least one drone is sufficiently small and lightweight to be coupled comfortably to the user; and
a drone communication element coupled to the drone and configured to transmit personal messages, images or data to a third party.

2. The system of claim 1, wherein the personal computer is a smartphone or a tablet.

3. The system of claim 1, wherein the personal computer is a smartwatch, wherein, optionally, the smartwatch acts as both the personal computer and portable drone home area.

4. The system of any preceding claim, wherein the portable drone home area is a wearable, wherein, optionally, the wearable is one of a backpack or clothing.

5. The system of any preceding claim, wherein the portable drone home area comprises a recharging device.

6. The system of any preceding claim, wherein the at least one drone tracks the user by GPS.

7. The system of any preceding claim, wherein the drone communication element comprises at least one of a camera, a screen, a microphone or a speaker.

8. The system of any preceding claim, wherein the application comprises a commercially available social media and/or dating application.

9. The system of claim 8, wherein the application is configured to generate an alert based on the user-profile information to the third party.

10. The system of claim 9, wherein the command comprises the tracking of and communication of at least one of a personal messages, images or data to the third party.

11. The system of claim 10, wherein the at least one of a personal messages, images or data further comprises iterative communications broadcasted based on a third party response, and / or wherein the at least one of a personal messages, images and data comprises streaming video.

12. The system of claim 10 or 11, wherein the personal computer is further configured to use at least one of GPS data from an application profile of the third party, a second drone home area coupled to the third party, or a third party personal computer.

13. The system of any preceding claim, wherein the commands comprise voice commands.

14. A method for personal drone communication comprising:
wirelessly pairing at least one drone to a personal computer that has an executable application thereon, the executable application including user-profile information about a user;
tracking the user with the at least one drone;
alerting the user, based on the user-profile information, of a third party in proximity to the user;
activating the at least one drone to determine the location of the third party;
communicating, via a communication device on the at least one drone, at least one of a personal message, image or data to the third party; and
providing commands to the drone, vis-à-vis the personal computer, to interact with the third party via the communication device, wherein, optionally, the provided commands comprise voice commands.

15. A personal drone communication system comprising:
at least one drone configured to communicate with a third party that is within one-hundred yards of the at least one drone and in light winds, the at least one drone comprising a drone communication element configured to transmit personal messages, images or data to the third party;
at least one wearable drone home area configured to detachably couple the drone to the user;
a personal computer in wireless communication with the at least one drone and configured to (i) run an application with user-profile information, (ii) process voice commands for the drone, and (ii) provide for iterative communications broadcasted to the third party.
